# EUROPEAN PATENT SPECIFICATION

(11) **EP 2 707 281 B1**
(45) Date of publication and mention of the grant of the patent: **25.11.2015**
(21) Application number: 12720202.6
(22) Date of filing: 11.05.2012
(51) Int. Cl.: B64C 1/06, B64D 13/00, B64C 1/40

(54) **PANEL, METHOD FOR MANUFACTURING A PANEL AND AIRCRAFT**
PLATTE, VERFAHREN ZUR HERSTELLUNG EINER PLATTE UND FLUGZEUG
PANNEAU, PROCÉDÉ POUR FABRIQUER UN PANNEAU, ET AÉRONEF

(30) Priority: 12.05.2011 DE 102011075774; 12.05.2011 US 201161485167 P
(43) Date of publication of application: 19.03.2014
(73) Proprietor: Airbus Operations GmbH, 21129 Hamburg (DE)
(72) Inventor: FRANKENBERGER, Eckart, 21129 Hamburg (DE)
(74) Representative: Maiwald Patentanwalts GmbH
(86) International application number: PCT/EP2012/058821
(87) International publication number: WO 2012/152934

(56) References cited:
- EP-A1- 1 510 454
- DE-A1-102006 050 534
- DE-A1-102009 015 856

## Description

The invention pertains to a panel for being detachably arranged between a skin of a means of transport and an interior lining of the means of transport, to a method for manufacturing a panel of this type and to an aircraft with a plurality of such panels.

Means of transport such as passenger aircraft regularly undergo an installation of equipment and fittings, in which, among other things, current-carrying and signal-carrying wiring cables, holders for fastening the wiring cables, insulating mats and air-conditioning ducts are installed. In this case, the holders frequently are initially fastened on the primary structure of the means of transport. The insulating mats are then fastened to the primary structure, wherein these mats are provided with corresponding cutouts for leading through the holders. Subsequently, the wiring cables are arranged in the holders. The air-conditioning ducts are then fastened to the primary structure. However, a substantial modification effort is required because the mounting and the design of the wiring cables, as well as the holders, are adapted to individual customer requirements. This high modification effort in turn requires a significant construction leadtime in order to configure the wiring cables, the holders and the insulating mats in a timely fashion before the installation begins. The individual holders are furthermore spaced apart from one another such that the wiring cables have a plurality of freely suspended sections. In addition, heat losses may occur in the region of the insulating mat cutouts such that the insulating effect deteriorates. The cutouts may also be produced and positioned incorrectly. Furthermore, the air-conditioning ducts are very sensitive and already vulnerable to strain whitening under slight compressive loads.

European patent application EP 1 510 454 A1 discloses a side panel for an aircraft fuselage that has a plate-like body, into which air-conditioning ducts are integrated and the inner surface of which forms an interior lining. However, this solution has the disadvantage that the entre side panel needs to be exchanged if the interior lining is damaged. It is also disadvantageous that the wiring cables are installed conventionally. In order to reduce the installation effort for wiring cables, German patent application DE 10 2009 015 856 A1 proposes to integrate the wiring cables into the skin segments or skin panels of the aircraft during their manufacture. However, such. an integral design is technically very demanding. Further prior art is known from DE 10 2006 050 534 A1, which describes a shell segment of an aircraft fuselage, comprising electric lines, which are integrated in the shell segment.

It is the objective of the invention to develop a panel for being detachably arranged between a skin of a means of transport and the interior lining of the means of transport, wherein said panel eliminates the above-described disadvantages and allows a simplified installation of equipment and fittings. The invention furthermore aims to develop a method for manufacturing a panel of this type, as well as an aircraft, in which the time required for the installation of equipment and fittings is reduced.

These objectives are attained with a panel with the characteristics of claim 1, a method with the characteristics of claim 10 and an aircraft with the characteristics of claim 11.

An inventive panel for being detachably arranged between a skin of a means of transport and an interior lining of the means of transport has a plate-like insulating body that features at least one integrated air-conditioning duct and at least one groove-like cable conduit that is at least sectionally open toward the inner surface.

The inventive solution allows a simplified installation of equipment and fittings because insulating material, at least one air-conditioning duct and at least one cable conduit are installed in one step. Due to the elimination of holders for the wiring cables, the insulating body that acts as insulating material does not require any cutouts for leading through holders. This not only precludes any incorrect cuts, but also improves the insulating effect because the insulating body is closed over a large surface area. The integration of the at least one air-conditioning duct that acts as an air-conditioning conduit precludes damages thereto such that strain whitening cannot, occur. Due to the at least one cable conduit that acts as a cable duct, the routing of the respective current-carrying and/or signal-carrying wiring cables is predefined and the risk of damages to the wiring cables is reduced because they do not have any freely suspended sections. In addition, it is possible to respond to customer requirements quickly and in due time. Furthermore, the weight of the interior lining can be reduced because it is structurally supported by the respective panel.

The insulating body preferably consists of a foam body of a foam-like material. The foam may be based, for example, on a polymer or on a metal such as aluminum and is characterized by a low weight, a high insulating effect and a simple manufacture. However, it is preferred to use a polymer because this makes it possible, in particular, to eliminate corrosion and the panel cannot become energized in case the wiring cable is accidentally damaged. Alternatively, a sandwich structure, for example, with a honeycomb core or collapsible core would also be conceivable.

In order to eliminate the need to provide the inner circumference of the air-conditioning duct with an airtight layer or to integrate the at least one air-conditioning duct into the insulating body in the form of a separate duct element, it is advantageous if the insulating body has a closed-pore material structure at least in a section that forms the air-conditioning duct. In order to improve the insulating effect, however, it is advantageous if the insulating body consists entirely of a closed-pore material such that a plurality of insulating air chambers is formed.

The weight of the panel and therefore the weight of the aircraft can be reduced if the insulating body is cross-sectionally tapered in a body section outside the at least one air-conditioning duct.

In order to prevent corrosion, it is advantageous if the insulating body features drainage bores for the removal of condensation water.

The installation can be additionally simplified if the insulating body is fire-retardant such that a separate fireproofing element can be eliminated. This can be realized, e.g., with a corresponding coating, an impregnation or a suitable selection of the insulating body material.

It is preferred to provide securing elements for clamping at least one wiring cable in the at least one cable conduit. The securing elements make it possible to securely fasten the wiring cable regardless of the cross-sectional ratio between the cable conduit and the wiring cable such that a narrow wiring cable can also be securely accommodated in a wide cable conduit and the cross-sectional surface of the cable conduit can be standardized.

The number of securing elements can be reduced if the insulating body features at least one bridge section that traverses the channel and defines a tunnel for leading through the at least one wiring cable.

The arrangement of the panel on the skin section can be simplified if the insulating body features edge sections for being positively clamped between reinforcements of a primary structure of the means of transport. Clips or other holding devices can be eliminated due to this positive clamping. The fastening is preferably realized by means of a so-called snap-and-click connection only. Since the reinforcements effectively serve as holding elements for the insulating body, a minimal distance between the panels can be adjusted such that the insulation is promoted.

According to an exemplary embodiment of the inventive method, it is proposed that the at least one air-conditioning duct and/or the at least one cable conduit is incorporated into the insulating body during its manufacture. For this purpose, the at least one duct and the at least one cable conduit may be reproduced with suitable substitute fillers such as wax cores that are removed from the insulating body under the influence of heat after its manufacture. However, particularly the fillers for reproducing the at least one cable conduit may also consist of a temperature-resistant solid body such as a metal body because the cable conduits are not circumferentially closed.

In another exemplary embodiment, corresponding drilling or milling operations for realizing the at least one air-conditioning duct and the at least one cable conduit are carried out after the manufacture of the insulating body.

A preferred aircraft features a plurality of inventive panels that are arranged between a fuselage skin and a cabin lining. Such an aircraft is characterized by a shortened installation of equipment and fittings, an optimized insulation and a lower weight.

Other advantageous exemplary embodiments of the invention form the objects of further dependent claims.

Preferred exemplary embodiments of the invention are described in greater detail below with reference to the schematic drawings. In these drawings:
Figure 1 shows a perspective representation of a first exemplary embodiment of an installed inventive panel,
Figure 2 shows a section through the first exemplary embodiment, and
Figure 3 shows a section through a second exemplary embodiment of the inventive panel.

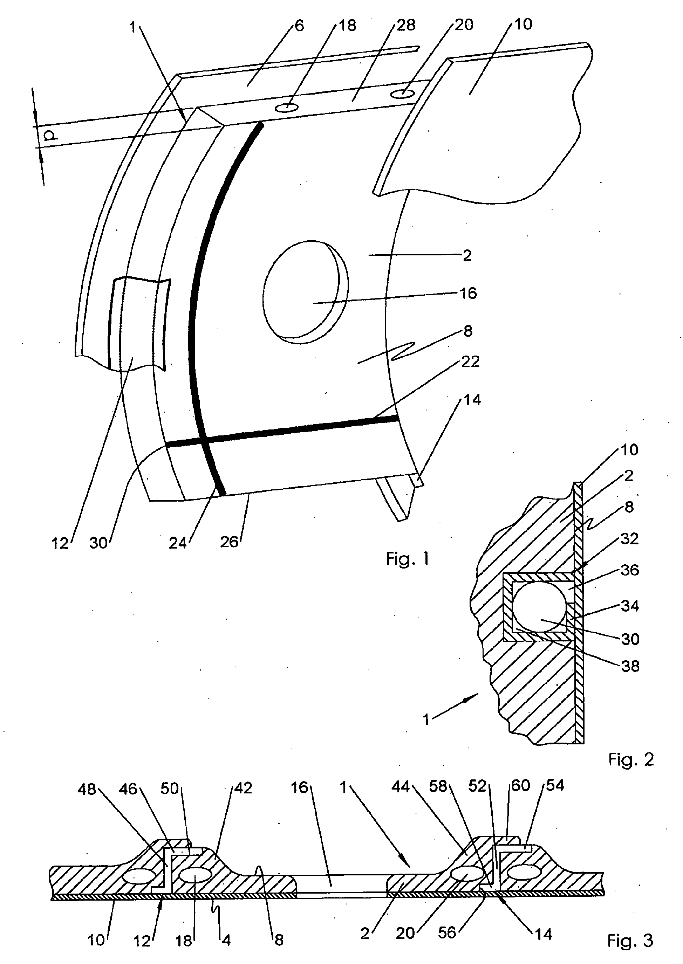

Figure 1 shows a perspective representation of a first exemplary embodiment of an inventive panel 1 for being detachably integrated into an aircraft fuselage between a skin 2 and an interior lining 4 (interior trim 4).

The panel 1 features a plate-like insulating or foam body 6 of a polymer that has a constant thickness d. The polymer consists of rigid foam with closed pores and has heat-insulating, noise-insulating and fire-retardant properties. The foam body 6 has an outer surface 8 (see Figure 3) that is in contact with the skin 2 and an inner surface 10 that is covered by the interior lining 4. It is positively clamped between two circumferential reinforcements such as frames 12, 14 and follows the curved or spherical shape of the skin 2. In order to ensure that the foam body 6 flatly contacts the skin 2 with its outer surface 8, a plurality of not-shown slot-like recesses for accommodating longitudinal reinforcements such as stringers are preferably produced in the outer surface 8.

The panel 1 furthermore has a window cutout 16 that extends through the foam body 6, two air-conditioning ducts 18, 20 and two groove-like cable conduits 22, 24. The panel 1 also features not-shown drainage bores for the removal of condensation water.

The air-conditioning ducts 18, 20 are arranged to both sides of the window cutout 16 in the form of two riser ducts. They extend through the foam body 6 in the circumferential direction of the aircraft fuselage and are open toward the surroundings and therefore toward the adjacent panel 1' on its narrow sides 26, 28. The air-conditioning ducts 18, 20 naturally may.also be oriented in the longitudinal direction of the aircraft fuselage. In order to prevent leaks in the transition area between the individual panels 1, 1', at least one end region of the air conditioning ducts 18, 20 may be respectively provided with integral couplings that penetrate into the air-conditioning ducts 18', 20' of the adjacent panel 1'. Alternatively, coupling sleeves and the like may also be inserted into the air-conditioning ducts 18, 20.

The cable conduits 22, 24 serve for accommodating current-carrying and/or signal-carrying wiring cables 30 or a cable bundle. They are arranged in the inner surface 10 of the foam body 6 and realized in the form of a longitudinal conduit 22 that is oriented in the longitudinal direction of the aircraft and a circumferential conduit 24 that extends in the circumferential direction. They are open toward the inner surface 10 and on their ends and have, e.g., a constant square cross section. The cable conduits are circumferentially closed by the interior lining 4 that contacts the inner surface 10 over a large surface area and thusly is structurally supported by the panel 1.

According to the longitudinal conduit 22 shown in Figure 2, a plurality of polymer-based securing elements 32 are provided for securing the wiring cables 30 in the cable conduits 22, 24 at least during the installation. The securing elements 32 have a square hollow profile that follows the contour of the cable conduits 22, 24 and is provided with a longitudinal gap 36 in the area of a wall 34 in order to insert the wiring cables 30 into a receptacle space 38 and to allow an elastic deformation of the hollow profile. They are realized in such a way that they can accommodate insulated cables 30 with different diameters. The securing elements 32 are arranged on the wiring cables 30 such that they are equidistantly spaced apart from one another and then positioned in the cable conduits 22, 24 with the wiring cables 30. During this process, the securing elements 32.are elastically deformed and held in the cable conduits 22, 24 in a self-locking fashion due to their inherent tension such that the wiring cables 30 are secured from falling out. Consequently, the interior lining 4 to be subsequently installed primarily serves for protecting the panel 1 and the wiring cables 30 from damages.

In order to reduce the number of securing element 30, the insulating body 2 may feature not-shown bridge sections that sectionally cover the cable conduits 22, 24 and thusly form tunnels for leading through the wiring cables 30.

Figure 3 shows a section through a second exemplary embodiment of the inventive panel 1. In significant contrast to the first exemplary embodiment, the wall thickness of a central body section 40 that accommodates a window cutout 16 is reduced in comparison with flanking edge sections 42, 44. In order to realize a required minimum duct cross section, air-conditioning ducts 18, 20 are integrated into the edge sections 42, 44 that effectively have an increased wall thickness. Cable conduits 22, 24 for accommodating wiring cables 30 and an interior lining 4 are not illustrated in order to provide a better overview.

In the first exemplary embodiment according to Figures 1 and 2, the edge regions 42, 44 serve as form-fitting elements for positively clamping (snap-and-click) the panel 1 between frames 12, 14. For this purpose, the panel 1 is, e.g., respectively guided between one frame 12 and the skin 2 with one edge region 42 and on the other frame 14 with the other edge section 44. According to the illustration in Figure 3, the left edge section 42 is realized in such a way that it is clamped between the skin 2 and an inner chord 46 of the left frame 12 and also flatly contacts the web 48 of the left frame 12. The left edge section 42 ends flush with the inner chord 46 and features a step 50 on the inner surface for this purpose. The right edge section 44 in the illustration according to Figure 3 is realized such that it flatly contacts the web 52 of the right frame 14 and is guided by an inner chord 54 of the right frame 14. It has a step 56 on the outer surface in order to accommodate an outer chord 58 of the right frame 14, as well as a projection 60 on the inner surface in order to cover the inner chord 54 of the right frame 14.

In a preferred inventive method for manufacturing the panel 1, wax cores for realizing the air-conditioning ducts 18, 20 and corresponding solid bodies such as metal strips for realizing the cable conduits 22, 24 are positioned in a moulding tool for the foam body 6 in the form of inserts. After positioning the wax cores and the metal strips, the moulding tool is closed and the polymer is introduced or injected into the closed moulding tool in order to produce the foam body 6 under the influence of heat and pressure. Subsequently, the foam body 6 is removed from the mould and the wax cores are dissolved away under the influence of heat in order to produce the panel 1.

The invention discloses a panel for being detachably arranged between a skin of a means of transport such as, e.g., an aircraft, a motor coach, a railway car or a ship cabin and an interior lining of the means of transport, wherein said panel has a plate-like insulating body that features at least one integrated air-conditioning duct and at least one groove-like cable conduit that is at least sectionally open toward the inner surface, a method for manufacturing a panel of this type, as well as an aircraft with a plurality of such panels.

### List of Reference Symbols

- 1: Panel
- 2: Skin
- 4: Interior lining / Interior trim
- 6: Foam body
- 8: Outer surface
- 10: Inner surface
- 12: Frame
- 14: Frame
- 16: Window cutout
- 18: Air-conditioning duct
- 20: Air-conditioning duct
- 22: Cable conduit
- 24: Cable conduit
- 26: Narrow side
- 28: Narrow side
- 30.: Wiring cable
- 32: Securing element
- 34: Wall
- 36: Longitudinal gap
- 38: Receptacle space
- 40: Central section
- 42: Edge section
- 44: Edge section
- 46: Inner chord
- 48: Web
- 50: Step
- 52: Web
- 54: Inner chord
- 56: Step
- 58: Outer chord
- 60: Projection

## Claims

1. A panel (1) for being detachably arranged between a skin (2) of a means of transport and an interior lining (4) of the means of transport, wherein said panel has a plate-like insulating body (6) that features at least one integrated air-conditioning duct (18, 20), **characterized in that** the plate-like insulating body (6) features at least one groove-like cable conduit (22, 24) that is at least sectionally open toward the inner surface (10).

2. The panel of claim 1, wherein the insulating body (6) is a foam body.

3. The panel of claim 2, wherein the insulating body (6) has a closed-pore material structure at least in the area of the at least one air-conditioning duct (18, 20).

4. The panel of claim 1, 2 or 3, wherein the insulating body (6) is cross-sectionally tapered in a body section (40) outside the at least one air-conditioning duct (18, 20).

5. The panel of one of the preceding claim, wherein drainage bores for the removal of condensation water are provided in the insulating body (6).

6. The panel of one of the preceding claims, wherein the insulating body (6) is fire-retardant.

7. The panel of one of the preceding claims, wherein at least one securing element (32) is provided for clamping at least one wiring cable (30) into the at least one cable conduit (22, 24).

8. The panel of one of the preceding claims, wherein the insulating body (6) has at least one bridge section that traverses the at least one cable conduit (22, 24).

9. The panel of one of the preceding claims, wherein the insulating body (6) has edge sections (42, 44) for being positively clamped between reinforcements (12, 14) of the means of transport.

10. A method for manufacturing a panel (1) of one of the preceding claims, wherein at least one air-conditioning duct (18, 20) and/or at least one cable conduit (22, 24) is/are produced in an insulating body (6) during or after the manufacture thereof.

11. An aircraft with a plurality of panels (1) of one of claims 1 to 9 that are arranged between a fuselage skin (2) and an interior cabin lining (4).

## Patentansprüche

1. Panel (1) zur lösbaren Anordnung zwischen einer Außenhaut (2) eines Transportmittels und einer Innenverkleidung (4) des Transportmittels, wobei das Panel einen plattenartigen Isolationskörper (6) aufweist, der zumindest einen integrierten Klimakanal (18, 20) aufweist, **dadurch gekennzeichnet, dass** der plattenartige Isolationskörper (6) zumindest eine zur Innenfläche (10) zumindest abschnittsweise geöffnete nutenartige Leitungsführung (22, 24) hat.

2. Panel nach Anspruch 1, wobei der Isolationskörper (6) ein Schaumkörper ist.

3. Panel nach Anspruch 2, wobei der Isolationskörper (6) zumindest im Bereich des zumindest einen Klimakanals (18, 20) eine geschlossenporige Materialstruktur hat.

4. Panel nach Anspruch 1, 2 oder 3, wobei der Isolationskörper (6) in einem Körperabschnitt (40) außerhalb des zumindest einen Klimakanals (18, 20) querschnittsverjüngt ist.

5. Panel nach einem der vorhergehenden Ansprüche, wobei in dem Isolationskörper (6) Abflussbohrungen zum Abführen von Kondenswasser vorgesehen sind.

6. Panel nach einem der vorhergehenden Ansprüche, wobei der Isolationskörper (6) brandhemmend ist.

7. Panel nach einem der vorhergehenden Ansprüche, wobei zumindest ein Sicherungselement (32) zum Einspannen zumindest einer Installationsleitung (30) in die zumindest eine Leitungsführung (22, 24) vorgesehen ist.

8. Panel nach einem der vorhergehenden Ansprüche, wobei der Isolationskörper (6) zumindest einen die zumindest eine Leitungsführung (22, 24) querenden Brückenabschnitt hat.

9. Panel nach einem der vorhergehenden Ansprüche, wobei der Isolationskörper (6) Randabschnitte (42, 44) zum formschlüssigen Einspannen zwischen Versteifungen (12, 14) des Transportmittels hat.

10. Verfahren zur Herstellung eines Panels (1) nach einem der vorhergehenden Ansprüche, wobei zumindest ein Klimakanal (18, 20) und/oder zumindest eine Leitungsführung (22, 24) während oder nach der Herstellung eines Isolationskörpers (6) in diesen eingebracht wird beziehungsweise werden.

11. Flugzeug mit einer Vielzahl von Panelen (1) nach einem der Ansprüche 1 bis 9, die zwischen einer Rumpfaußenhaut (2) und einer Kabineninnenverkleidung (4) angeordnet sind.

## Revendications

1. Panneau (1) destiné à être agencé de manière détachable entre une peau (2) d'un moyen de transport et un revêtement intérieur (4) du moyen de transport, dans lequel ledit panneau présente un corps isolant en forme de plaque (6) qui présente au moins une gaine de conditionnement d'air intégrée (18, 20), **caractérisé en ce que** le corps isolant en forme de plaque (6) présente au moins une conduite de câble en forme de rainure (22, 24) qui est au moins ouverte sectionnellement vers la surface intérieure (10).

2. Panneau selon la revendication 1, dans lequel le corps isolant (6) est un corps en mousse.

3. Panneau selon la revendication 2, dans lequel le corps isolant (6) présente une structure de matériau à pores fermés au moins dans la zone de l'au moins une gaine de conditionnement d'air (18, 20).

4. Panneau selon la revendication 1, 2 ou 3, dans lequel le corps isolant (6) est conique en coupe transversale dans une section de corps (40) extérieure à l'au moins une gaine de conditionnement d'air (18, 20).

5. Panneau selon une des revendications précédentes, dans lequel des trous de drainage pour l'enlèvement de l'eau de condensation sont prévus dans le corps isolant (6).

6. Panneau selon une des revendications précédentes, dans lequel le corps isolant (6) est ignifuge.

7. Panneau selon une des revendications précédentes, dans lequel au moins un élément de fixation (32) est prévu pour serrer au moins un fil de câblage (30) dans l'au moins une conduite de câble (22, 24).

8. Panneau selon une des revendications précédentes, dans lequel le corps isolant (6) présente au moins une section de pont qui traverse l'au moins une conduite de câble (22, 24).

9. Panneau selon une des revendications précédentes, dans lequel le corps isolant (6) présente des sections de bord (42, 44) destinées à être serrées par complémentarité de formes entre des renforts (12, 14) du moyen de transport.

10. Procédé de fabrication d'un panneau (1) selon une des revendications précédentes, dans lequel au moins une gaine de conditionnement d'air (18, 20) et/ou au moins une conduite de câble (22, 24) est/sont produite(s) dans un corps isolant (6) pendant ou après sa fabrication.

11. Aéronef avec une pluralité de panneaux (1) selon une des revendications 1 à 9, qui sont agencés entre une peau de fuselage (2) et un revêtement intérieur de cabine (4).
